# EUROPEAN PATENT APPLICATION

(11) **EP 2 298 087 A2**
(43) Date of publication of application: **23.03.2011**
(21) Application number: 10180869.9
(22) Date of filing: 19.12.2003
(51) Int. Cl.: A23L 1/304

(54) **Mineral balance product and method for its production**

(30) Priority: 20.12.2002 FI 20020509 U
(62) Divisional of application: 03767838.0
(71) Applicant: Naturansa Ky Olavi Huikari, 00340 Helsinki (FI)
(72) Inventor: Huikari, Olavi, 00340, Helsinki (FI)
(74) Representative: Järveläinen, Pertti Tauno Juhani

(57) **Abstract**

A product for use e.g. in foodstuffs to restore the natural mineral composition that optimizes intracellular metabolism in plants, animals as well as humans, and a method for its production, wherein the macro, micro and ultramicro minerals needed for intracellular metabolism according to the user's genotype, prepared from perennial plant tissue, are restored e.g. in a foodstuff at production time in correct quantitative proportions and in a usable form (1).

## Description

The present invention relates to a mineral balance product strengthening the natural intra-cellular mineral balance and to a method for its production.

Investigations in vegetable and animal physiology have long ago shown that, besides many dissimilarities, there are significant similarities between plants and animals at the level of cellular metabolism. This also applies to the intracellular metabolism in living wood cells and in human cells. The similarities are natural, considering that, as regards the position and function of living beings in the earth's ecological system, green plants are the most important producer group while animals are consumers and cannot do without plants. Circulation of energy and substances in the chain of producers - consumers - decomposers is the basis of the ecological system of the entire earth. In nature, dysplastic and old individuals disappear from the natural ecological circulation already at the producer stage due to mineral deficiencies, among other things. They are reduced by decomposers back into inorganic compounds and thus become again available for use by producers. The mineralization process, besides producing minerals needed in new cellular life, also produces lye, which neutralizes excessive acidification pernicious to cellular metabolism.

Nature's own method is to circulate macro, micro and ultramicro minerals essential to cellular metabolism so that they become available to new life in as usable and perfect form as possible and in correct quantitative proportions relative to each other.

The present invention described below concerns a method that provides a short-cut over part of the vegetal stage of ecological circulation, by developing from a preselected cellular raw material a product suitable to be added e.g. to selected human foodstuff and ensuring a balanced supply of macro, micro and ultramicro minerals in intracellular metabolism in human cells. In the invention, nature's own method is utilized in cellular metabolism.

The details of the features characteristic of the invention are presented in the claims below.

In the following, the invention will be described in detail by the aid of an example with reference to the attached drawings, wherein
Fig. 1 illustrates the manufacturing process,
Fig. 2 illustrates a disturbance in cellular metabolism and its correction in a tree,
Fig. 3 visualizes the effect of the product of the invention as a revitalizer according to research with yeast, and
Fig. 4 visualizes the effect of the product of the invention as a revitalizer according to research with bacteria.

Natural development is based on the principle that each living cell growing and developing in accordance with the genotype of each species and individual gets the required macro, micro and ultramicro minerals in correct proportions relative to each other. The cell is therefore itself able to produce all the compounds needed in intracellular metabolism for a healthy life of the individual. New cells being generated and cells under development are given a primary status in the macro, micro and ultramicro mineral supply of the individual. The cell is thus given a possibility to use all required the macro, micro and ultramicro minerals in ideal proportions relative to each other when creating the structure needed in each case. For example, the human body contains over 50 billion cells, from which are formed the 230 different human cell types and the vitally important parts of a body that is able to function.

If for some reason the cell can not get all the minerals needed in intracellular metabolism and in correct relative quantities in proportion to each other, there will arise a disturbance of cellular metabolism that leads to a malformation of the cell, and the cell is exposed to the action of decomposers and ends up in circulation. Nature does not correct defective elements, but if possible, creates new tissue of healthy structure to replace old and dysplastic tissue. The new tissue generates the cellular metabolism products essential to healthy life of the individual after a correct mineral supply has been achieved.

In this context and in the present invention, observations found to be true in scientific experiments and investigations have been utilized as basic information. They are as follows:

Certain deficiencies of macro, micro and ultramicro minerals cause in cellular metabolism and production of cellular tissue detectable disturbances, which in most cases differ from each other, already at the time of creation of the cells and even later as the cells are developing towards special functions according to their genotype.

Imbalances in the supply of macro, micro and ultramicro minerals, in the case of both excessive supply and deficiency, lead to disturbances in cellular metabolism and to malformation of growth tissues as well as to excessive growth of tissues and even to the death of the whole individual.

The most reliable way of ensuring an implementation and maintenance of cellular metabolism according to the genotype is by providing a natural balancing of total mineral supply to be utilized by growing and developing cells themselves. The metabolism according to the cells' own genotype will then be able to produce all the required spin-offs and structures by itself and to perform the various vital functions according to their genotype.

Nature has produced the best provisions for new life and maintenance of intracellular metabolism by preserving lignified tissues of perennial plants. Stored in the lignified tissues is also energy assimilated from solar light in an amount as required for the mineralization of old tissue.

The mineral residue produced in mineralization has proved to be the most effective and prolonged-action agent maintaining healthy cellular growth as compared to all chemical and individual mineral supplements or supplements obtained e.g. by extraction. A mineral composition given once and obtained from plant material having grown according to its genotype maintains good growth and health of all cells of the individual.

In the method, the composition of the usable basic material is meticulously examined on the basis of analyses.

The basic material has been used as plant fertilizer in different quantities in experiments under accurate control. From the fertilized testing areas, berries, mushrooms as well as plant and earth samples have been collected. From these, no toxic or other detrimental effects have been detected, nor have any harmful amounts of heavy metals or radioactive radiation.

Controlled mineral balancing has produced very effective activation of the microbiological humus decomposition of earth. It has been established that the amount of aerobic decomposer microbes has increased.

It has been established that the tips of plant roots and mycorrhiza fungi tend to grow towards the area influenced by the basic material.

When the mineralization residue is used as a basis of mineral balancing, the macro, micro and ultramicro minerals, being obtained from natural products, are obtained in a form already optimized by vegetal cells and in mutual quantitative proportions correct for cellular metabolism.

A new discovery is that this procedure ensures a balanced supply of ultra micro minerals for tissue being generated. This is impossible except by obtaining the minerals from the cells of perennial plants that have been able to live in accordance with their genotype. It is known that, in the amounts of ultra micro minerals essential to life in accordance with the genotype, a concentration of one hundred billionth is too low and causes disturbances in cellular metabolism, a concentration of one ten billionth maintains cellular metabolism in accordance with genotype, whereas one billionth leads to poisoning reactions.

In the invention, based on this background information, the dosages of the product have been so defined that they are natural and so small that they can not involve any risk of toxicity.

The mineralization residue of healthy and perennial plant tissue is a nutrient for new life.

The regularities created by nature apply in every cell and form a basis for all life.

This means that a perennial plant having grown to an external form according to its genetic genotype has used and bound macro, micro and ultramicro minerals to the vegetal material during the stepwise metabolic processes in its innumerable cells as regulated and controlled by pigments, enzymes and hormones received and created by the metabolism itself.

The material used as a basic raw material is the mineralization residue of cells having lived before and contains both macro, micro and ultramicro minerals for the generation of new cellular material in optimal proportions relative to each other.

In the manufacture of the product, organic compounds and nitrogen are removed. This is of great importance in respect of usability of the product.

The information forming the basis for the use of the products of the invention designed for the balancing of cellular minerals has been tested in forest ecological research carried on for decades. This research has produced in Finland an information base for active development of the growth and health of Finland forests that is approved for scientific publications and internationally highly appreciated. These investigations have provided new explanations to many adaptations to life, even to extremely difficult environmental conditions, developed by nature itself.

The investigations have penetrated into the world of cellular metabolism, where the phenomena take place on a nano-scale invisible to the eye. The invention has arisen from the observation that the results of research on cellular metabolism made on long-time plant cells, i.e. cells having continued even through decades and of the same trees, can be used for correcting disturbances in cellular metabolism in animals and even humans.

From a specially prepared basic raw material having undergone careful preliminary research, by applying the production method of the invention for example in foodstuffs, a product complementing and balancing the mineral composition in the cellular metabolism of the user of the foodstuff is obtained. The product is created by combining the product of the invention with a carrier material prepared from natural products.

### SCHEMATIC DESCRIPTION OF AN EXAMPLE PRODUCTION PROCESS

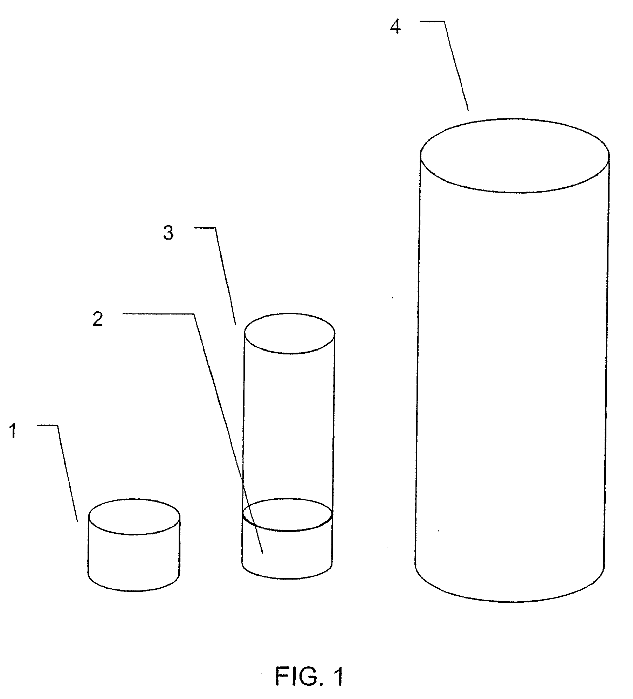

The production process comprises the following steps: (Fig. 1)
1. Testing of the quality of the basic raw material, and its screening and weighing.
2. Mineralization of the cellular material.
3. Addition of water and mixing.
4. Heating to about 90°C. Cooling and a waiting period of 48 hours, and reheating. (1 in Fig. 1)
5. Cooling and sedimentation. (2 in Fig. 1)
6. Removal of sediment and scum.
7. Filtering of basic solution. (3 in Fig. 1)
8. Regulation of acidity. (3 in Fig. 1)
   The natural product added is e.g.: cranberry, lingonberry, juice of citrus fruit or paste, beer, wine, acid fermentation product, acid-milk products. Fig.
9. Addition of the mineral balance product to a commercial product.
10. Packaging.
11. Making the product available to consumers (4 in Fig. 1).

Special features of the process:
The process produces no toxic or other emissions.

No combustible fluids or other materials are used and no combustible products are produced in the process.

The mixing requires no speed or high power. Slow and rather rough mixing is sufficient. The raw materials are preserved without special measures.

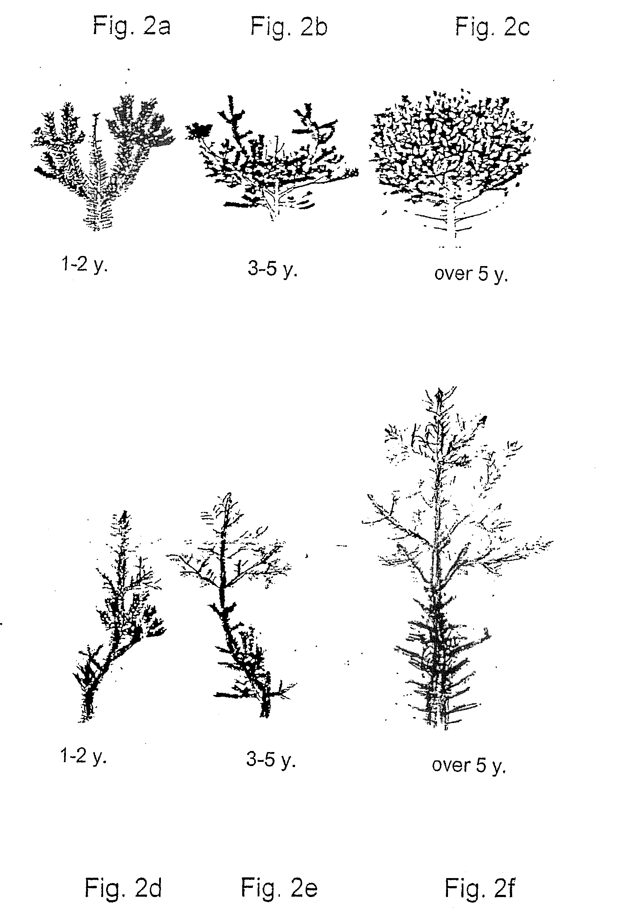

Figures 2a - 2f further visualize disturbances of cellular metabolism in trees. The drawings in the upper row (Fig. 2a - 2c) visualize a change in external appearance caused by a lack of minerals and the development of such change in a pine. The lower row (Fig. 2d - 2f) visualize a fast correction of dysplasia after the tree has got minerals that were lacking before.

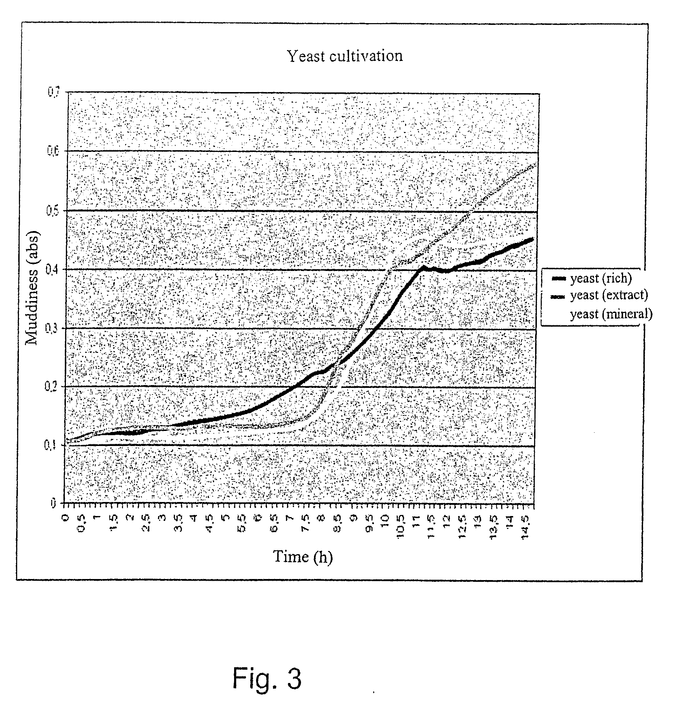

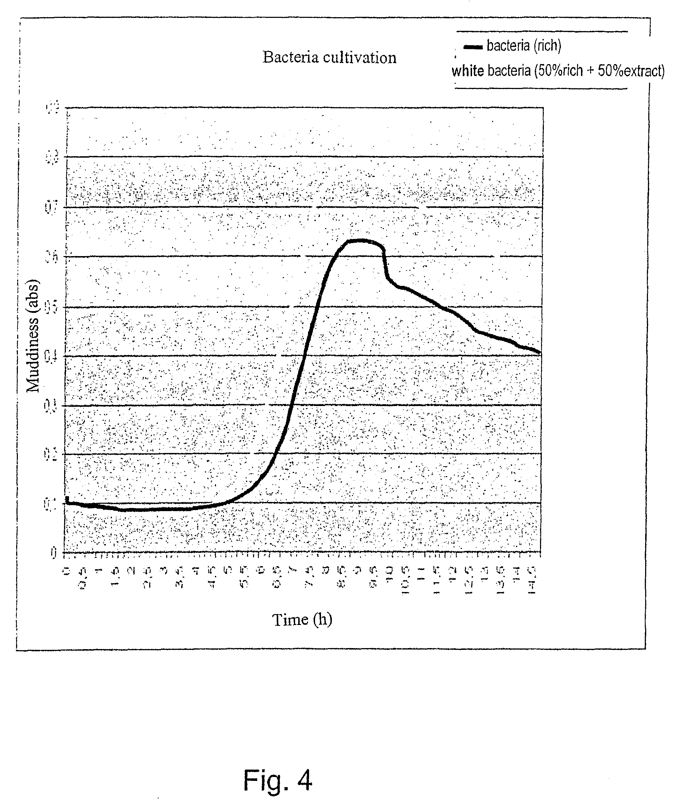

Investigations were carried out to study the effect of the R+ product of the invention as a revitalizer in the case of *Saccharomyces cerevisiae* and *Bacillus* genus bacteria. The mineral needs of these are accurately known. The results of the experiment showed that the R+ product does not inhibit the growth of bacterium. The mineral needs can be satisfied even completely by a supply of R+. The results of the investigation are presented in Fig. 3 and 4.

Fig. 3. Cultivation of baker's yeast in a Bioscreen micro cultivation device. The cultivation was performed using three different cultivation substrates, and for each cultivation five parallel cultivations were implemented. On the normal cultivation substrate of yeast, growth started somewhat sooner than on mineral substrates. The R+ product did not slow down the growth of yeast and it could be used to completely replace the normal minerals added to the cultivation substrate in yeast cultivation tests.

Fig. 4. For the growth of the Bacillus strain used in the experiment, tryptophan was required. Therefore, the normal cultivation substrate for bacteria could only be partially replaced by the R+ product in the experiment. In this test, the growth remained at a somewhat lower level than on a substrate containing more tryptophan. However, the R+ product did not disturb growth, because growth started simultaneously and the speed of growth was the same in both cultivations.

At this stage, these investigations significantly support a successful introduction of the R+ product as a means of ensuring the naturalness of the mineral balance of foodstuffs.

It is obvious to the person skilled in the art that different embodiments of the invention are not limited to the example described above, but that they may be varied within the scope of the claims presented below.

## Claims

1. A product for use in foodstuffs to restore the natural mineral composition that optimizes intracellular metabolism in plants, animals as well as humans, **characterized in that**
- the raw material is tree,
- which raw material is visually analyzed,
- which raw material is selected to include trees having grown to an external form according to its genetic genotype,
- which raw material is combusted to a mineral residue,
- having neither organic compounds nor nitrogen, and
- the product has a mineral composition that complements and balances the mineral needs to ensure a balanced supply of the ultramicro minerals needed for intracellular metabolism according to the user's genotype.

2. A product according to claim 1, **characterized in that** only macro, micro and ultramicro minerals (2) that have proved to be useful by the life of a perennial plant cell having lived in accordance with its genotype are dosed e.g. into a foodstuff.

3. A product according to claim 1 or 2, **characterized in that** no nitrogen, proteins or fats are added to the product of the invention.

4. A product according to claims 1, 2, 3, **characterized in that** a given addition of macro, micro and ultramicro minerals to the product of the invention is so supplied in a dosage such that cells undergoing cell division and development are themselves able to produce cellular metabolism products in accordance with their genetic genotype.

5. A product according to claims 1, 2, 3, 4, **characterized in that** it enables the production of cellular metabolism products in the organism's own cells and such products need not be added in the form of extracts or isolated or prepared products.

6. A product according to claims 1, 2, 3, 4, 5, **characterized in that** the original composition of macro, micro and ultramicro minerals obtained from the basic raw material of the invention is mixed in original and natural quantitative proportions into a carrier material usable e.g. in foodstuffs.

7. A method for producing a mineral balance product strengthening the natural intra-cellular mineral balance, **characterized in that** a carefully preselected tissue (1) of trees, having grown in accordance with its genotype is used as a basic raw material,
- which raw material is visually analyzed,
- which raw material is selected to include trees having grown to an external form according to its genetic genotype,
- which raw material is combusted to a mineral residue,
- having neither organic compounds nor nitrogen.

8. A method for producing a product according to claim 7, **characterized in that** the plant tissue is mineralized either by a slow method, such as e.g. composting, or by a fast method, such as e.g. combustion, at a carefully controlled temperature.

9. A production method according to claims 7 and 8, **characterized in that** the intermediate product obtained in the production is processed into a product such that its excessive alkalinity is neutralized and the product becomes usable e.g. as part of human nutrition.

10. A production method according to claims 7-9, **characterized in that**, from the intermediate product, large particles impeding its use e.g. as an additive in foodstuffs are removed during the production process so that a balanced useful composition of macro, micro and ultramicro minerals is preserved and the use of the product will not involve any risk of poisoning while at the same time the taste and preservability of the product are changed to make them suited for use e.g. in foodstuffs.

11. A production method according to claims 7-10, **characterized in that** a proportion of silicon sufficient for the user's cellular metabolism is preserved.

12. A production method according to claims 7-11, **characterized in that** the product can be used e.g. in the form of either liquid, paste, powder or grains.

13. A production method according to claim 7, **characterized in that** the production comprises at least the steps of:
- testing of the quality of the basic raw material and its screening and weighing,
- addition of liquid and mixing
- heating, preferably to about 90°C
- cooling and sedimentation
- removal of sediment and/or scum.
- filtering of the basic solution, and
- regulation of acidity.
